# EUROPÄISCHE PATENTSCHRIFT

(11) **EP 1 373 364 B1**
(45) Veröffentlichungstag und Bekanntmachung des Hinweises auf die Patenterteilung: **23.08.2006**
(21) Anmeldenummer: 02732528.1
(22) Anmeldetag: 27.03.2002
(51) Int. Cl.: C08G 65/48

(54) **SULFONIERTES POLYETHERKETONKETON**
SULFONATED POLYETHERKETONEKETONE
POLYETHER CETONE CETONE SULFONE

(30) Priorität: 28.03.2001 DE 10116391
(43) Veröffentlichungstag der Anmeldung: 02.01.2004
(73) Patentinhaber: FuMA-Tech Gesellschaft für funktionelle Membranen- und Anlagentechnologie mbH, 66386 St. Ingbert/Saar (DE)
(72) Erfinder: BAUER, Bernd, 71665 Vaihingen/Enz (DE)
(74) Vertreter: Patentanwälte Ruff, Wilhelm, Beier, Dauster & Partner
(86) Internationale Anmeldenummer: PCT/EP2002/003402
(87) Internationale Veröffentlichungsnummer: WO 2002/077068

(56) Entgegenhaltungen:
- EP-A- 0 382 356
- EP-A- 0 574 791
- EP-A- 0 824 959
- GB-A- 2 285 261

## Beschreibung

Die vorliegende Erfindung betrifft sulfoniertes Polyetherketonketon (sPEKK), Verfahren zu dessen Herstellung sowie aus sPEKK hergestellte Membranen und Polymermischungen.

Membranen finden heute in vielen Bereichen der Technik eine breite Anwendung. Für ihre sehr unterschiedlichen Verwendungszwecke müssen die Membranen ganz bestimmte Eigenschaften aufweisen. Membranen, die in der Elektrodialyse, der Elektrolyse, der Donnandialyse sowie in Batterien eingesetzt werden, sind als sogenannte permselektive Membranen in der Lage, die Durchwanderung von lonen zu ermöglichen. Man spricht hier auch von Kationenaustauschermembranen. Als Protonenleiter werden solche Membranen bezeichnet, die in Brennstoffzellen zum Einsatz kommen. Ebenso wie in anderen galvanischen Elementen wird in einer Brennstoffzelle elektrische Energie durch Energie-Direktumwandlung aus chemischer Energie erzeugt. Die Reaktionsräume an Anode und Kathode sind hier durch eine Membran getrennt, die für Protonen permeabel ist.

An derart eingesetzte technische Membranen sind sehr hohe Anforderungen zu stellen. Zum einen müssen sie natürlich die entsprechenden Leitfähigkeiten gewährleisten. Zum anderen bedarf es einer hohen chemischen und thermischen Beständigkeit. Diese Beständigkeit ist in ganz besonderem Maße von Membranen zu fordern, die in Brennstoffzellen eingesetzt werden.

Es gibt bereits eine große Vielfalt von verschiedenen Membranen, die für bestimmte Anwendungen geeignet sind. Hierzu zählen Membranen auf der Basis von Perfluorsulfonsäuren, nicht-fluorierte Polysulfonsäuren sowie Polycarboxylate und Polyphosphonate. Ein wichtiger Vertreter von nicht-fluorierten Membranen sind die zur Elektrodialyse einsetzbaren Kationenaustauschermembranen, die im wesentlichen auf der Basis von vernetztem und sulfoniertem Polystyrol hergestellt sind. Diese Membranen werden beispielsweise durch Mischen der Monomere mit PVC-Pulver nach der Paste-Methode hergestellt, wobei die Polymerisation zum Film erfolgt und anschließend durch Sulfonierung eine Kationenaustauschermembran erzeugt wird. Andere Spezialtypen von Membranen sind auf der Basis von beispielsweise Acryl- säuremonomeren hergestellt. Alle diese Membranen sind durch eine eingeschränkte chemische und thermische Beständigkeit gekennzeichnet, weshalb sie für den Einsatz in Brennstoffzellen aufgrund der mangelnden Oxidationsbeständigkeit in keiner Weise geeignet sind.

Für den Einsatz in Brennstoffzellen haben Membranen aus sulfoniertem Polyetheretherketon eine eingeschränkte Bedeutung erlangt. Solche Membranen sind jedoch nur bei tiefen Anwendungstemperaturen sowie kleinen Leistungsdichten und kurzen Standzeiten brauchbar, da die chemische Stabilität unter oxidativen Bedingungen stark eingeschränkt ist. Hier spielen zwei Abbaureaktionen der nicht-fluorierten Polymeren eine wichtige Rolle, und zwar handelt es sich dabei um Oxidationen und Desulfonierungen unter oxidativen Bedingungen oder bei erhöhten Temperaturen. Dies erklärt sich vermutlich mit der geringeren C-H-Bindungsenthalpie verglichen mit perfluoriertem Systemen. Insbesondere tertiäre benzyklische C-H-Gruppen sind gegenüber einem Angriff durch ein Hydroperoxidradikal nicht beständig.

Unter den nicht-fluorierten Polymeren bringen ausschließlich rein aromatische Molekülketten eine ausreichende Oxidationsbeständigkeit mit. Hierbei sind als wichtige Polymere die Arylpolymere mit ausschließlich Sauerstoff und Schwefel als Heteroatom zu nennen. Die notwendige Leitfähigkeit muß hier durch einen entsprechenden Sulfonierungsgrad gewährleistet werden. Allerdings steigt die Wasserlöslichkeit bei ansteigendem Sulfonierungsgrad, so daß viele prinzipiell mögliche Materialien bei einer ausreichend hohen lonen- leitfähigkeit durch entsprechende Sulfonierung nicht mehr für eine Membranherstellung geeignet sind.

Insbesondere die Polyketone kommen für derartige Anwendungen in Frage. Daher ist das Gebiet der Sulfonierung von Polyaryletherketonen schon seit längerem ein Gebiet intensiver Forschung. Hierbei ist erkennbar, daß die Oxidationsbeständigkeit des Materials bei zunehmendem Anteil an Keto-Gruppen im Polyetherketon deutlich verbessert ist. Mit zunehmendem Anteil an Keto-Gruppen steigt auch die Kristallinität sowie die Schmelztemperatur und die Schmelzviskosität des Materials.

Hierdurch wird eine Sulfonierung außerordentlich erschwert, weshalb die Polyetherketone sehr starke Sulfonierungsmittel wie beispielsweise Schwefeltrioxid (SO₃) oder komplex gebundenes SO₃ an Triethanolphosphorsäureester benötigen. Entscheidende Nachteile solch starker Sulfonierungsmittel sind ein während der Sulfonierungsreaktion ablaufender Kettenabbau sowie eine stattfindende Vernetzung, die die Qualität des sulfonierten Materials beeinträchtigen. Ganz entscheidend sind weiterhin der ausgesprochen hohe Chemikalienverbrauch bei der Sulfonierung, welcher mit entsprechend hohen Kosten einhergeht.

Erste Versuche zur Sulfonierung an O-Phenylen-CO-Strukturen von Polyetherketonen als nukleophile Substitutionsreaktionen wurden 1985 durchgeführt. Da in O-Phenylen-CO-Strukturen die Phenylenringe von der Ketoneinheit stark desaktiviert sind, ist eine direkte Sulfonierung von keto-reichen Polyaryletherketonen entsprechend schwierig. Bei der Verwendung von freiem Schwefeltrioxid können hingegen gewisse Sulfonierungs-ausbeuten erzielt werden. Beispielsweise beschreibt die DE 196 10 303 einen Sulfonierungsprozeß mit rauchender Schwefelsäure. In dem hier beschriebenen 2-Stufen-Prozeß wird das Polyetherketon zunächst in Schwefelsäure gelöst und durch Zusatz von Oleum im Reaktionsgemisch die Sulfonierung initiiert.

Bei der Sulfonierung in Schwefelsäure werden zur Herstellung von etwa 1 kg Membranrohmaterial etwa 10 l Schwefelsäure bzw. Oleum verbraucht. Als Abprodukt fallen ca. 200 l verdünnte Schwefelsäure zur Neutralisation an. Diese großen Mengen Lösungsmittel stellen ein erhebliches umweltbelastendes und entsorgungstechnisches Problem dar.

Subsitutionsreaktionen mit Chlorsulfonsäure, die an Polyetherketonen durchgeführt wurden, sind von Litter und Marvel (M.I. Litter, C.S. Marvel, - J.Polym.Sci., Polym.Chem.Ed, 23 (1985) 2205-2223) beschrieben worden. Hierbei sind jedoch Reaktionstemperaturen von bis zu 90°C notwendig, so daß zumindest partiell mit Zersetzungen der Polymerhauptkette gerechnet werden muß. Hierdurch treten Löslichkeitsprobleme der Produkte auf, die eine weitere Verarbeitung zu Membranen erschweren bis unmöglich machen.

Bisher wird vorzugsweise Polyetheretherketon (PEEK) als typisches Grundpolymer für die Herstellung von relativ beständigen Kationenaustauschermembranen verwendet. Daueruntersuchungen zeigen allerdings, daß eine für die Verwendung in Brennstoffzellen ausreichende chemische, thermische und insbesondere auch mechanische Stabilität nur bei tiefen Temperaturen bis zu einer Betriebstemperatur von maximal 70°C gegeben ist. Bei höheren Temperaturen tritt eine starke Quellung auf, die später durch eine zusätzliche Desulfonierung überlagert wird. Obwohl also sulfoniertes Polyetheretherketon aufgrund seiner elektrochemischen Eigenschaften prinzipiell für den Einsatz in Brennstoffzellen geeignet ist, ist es aufgrund seiner chemischen und mechanischen Stabilität nur eingeschränkt nutzbar.

In der EP-A-0824959 werden poröse Membranen offenbart, die aus im wesentlichen nicht sulfonierten aromatischen Polyetherketonen hergestellt sind. Diese Membranen zeigen aufgrund ihres hohen kristallinen Anteils eine große Hitze- wie Chemikalienresistenz. Die hergestellten Polymere weisen eine hohe Kristallinität von 10 Gew. % oder mehr auf. Deshalb findet bei dem Lösen der Polyetherketone in konzentrierter Schwefelsäure keine Sulfonierung statt.

EP-A-0574791 offenbart Polymerelektrolyt-Membranen aus sulfonierten aromatischen Polyetherketonen. Im mehrstufigen Verfahren werden diese isoliert und als Folie verarbeitet, wobei in der Folie vorhandene vernetzbare Substituenten vernetzt werden. Die sulfonierten Polyetherketone eignen sich als protonenleitende Festelektrolyt-Membranen. Es werden unterschiedliche Kombinationen verschiedener möglicher Polyetherketone aufgeführt. Polyetherketonketon (PEKK) wird nicht sulfoniert.

Die EP-A-0382356 und die GB-A-2285261 befassen sich ebenfalls mit Membranen, die aromatische Etherketon-Polymere enthalten. Es wird unter anderem auf die Kristallinität der Polymere abgestellt. So erhaltenen Membranen lassen sich beispielsweise für die Ultrafiltration oder die Mikrofiltration verwenden. Ein hoher kristalliner Anteil verleiht auch hier den Membranen eine hohe Widerstandsfähigkeit gegenüber Hitze und Chemikalien. Für die Folienherstellung werden die verschiedenen Polymere beispielsweise in Säure gelöst. Die Konzentration der Säure wird dabei so eingestellt, dass eine chemische Reaktion mit dem jeweiligen Polymer unterbleibt.

Die Erfindung stellt sich die Aufgabe ein Material bereitzustellen, welches für die Herstellung von Membranen geeignet ist. Die Membranen sollen eine ausreichende chemische und thermische Beständigkeit aufweisen, so daß die Membranen für die Anwendung in Brennstoffzellen und ähnlichem geeignet sind. Insbesondere sollen die Membranen stabil unter oxidativen Bedingungen und/oder bei erhöhter Temperatur sein. Darüber hinaus stellt sich die Erfindung die Aufgabe, bei einer Sulfonierung des Materials auf starke Sulfonierungsmittel verzichten zu können. Hierdurch sollen die Entsorgungsproblematik entschärft und die Kosten für die Herstellung der Membranen erheblich gesenkt werden.

Diese Aufgabe wird gelöst durch sulfoniertes Polyetherketonketon (sPEKK), wie es in Anspruch 1 beschrieben ist. Gegenstand der Erfindung ist somit ein sulfoniertes Polyetherketonketon, welches amorph ist und/oder durch Sulfonierung von amorphen Polyetherketonketon erhältlich ist, wobei das sulfonierte Polyetherketonketon unter Verwendung von Diphenlyether und Benzoldicarbonsäurederivat und Sulfonierung herstellbar ist, und wobei das Benzoldicabonsäurederivat ein Gemisch von mindestens zwei verschiedenen Benzoldicarbonsäurederivaten, zumindest von Isophtalsäurederivat und Terephtalsäurederivat, ist, wobei beim sulfonierten Polyetherketonketon ein Teil von zwischen zwei Ketogruppen liegenden Phenylgruppen in einer von der para-Stellung abweichenden meta-Stellung vor liegt und etwa 10 bis etwa 60 % Isophtalsäurederivat und wobei das Gemisch etwa 40 bis etwa 90 % Terephtatsäurederivat enthält. Bevorzugte Ausführungsformen sind in den Ansprüchen 2 bis 17 dargestellt. Die Ansprüche 8 bis 14 betreffen mit diesem Material herstellbare Membranen. Anspruch 15 beschreibt eine entsprechende Polymermischung. Anspruch 16 betrifft Brennstoffzellen und Anspruch 17 sowie die hiervon abhängigen Ansprüche 18 bis 23 betreffen ein Verfahren zur Herstellung von sulfoniertem Polyetherketonketon. Anspruch 24 beschreibt das sulfonierte Polyetherketonketon, welches nach diesem Verfahren herstellbar ist. Die Ansprüche 25 bis 27 betreffen die Verwendung des sulfonierten Polyetherketonketon. Der Wortlaut sämtlicher Ansprüche wird hiermit durch Bezugnahme zum Inhalt der Beschreibung gemacht.

Das erfindungsgemäße sulfonierte weitgehend amorphe Polyetherketonketon (sPEKK) ist für die oben beschriebenen Verwendungen in Membranen in ganz besonderer Weise geeignet. Die Membranen sind chemisch, thermisch und mechanisch stabil. Weiterhin ist die Sulfonierung wesentlich problemloser durchzuführen. Das erfindungsgemäße sPEKK zeichnet sich dadurch aus, daß es amorph ist und/oder durch Sulfonierung von amorphem PEKK erhältlich ist. Herkömmlicherweise wurde im wesentlichen kristallines Polymer für die Sulfonierung eingesetzt. Dieses ist der Sulfonierung nur extrem schwierig zugänglich, weshalb sehr starke Sulfonierungsreagenzien verwendet werden mußten. Durch Verwendung von amorphem Ausgangsmaterial ist es nun möglich, die Sulfonierung unter wesentlich milderen Bedingungen durchzuführen. Das Material ist durch seine unregelmäßigere Struktur den Reagenzien deutlich besser zugänglich, wodurch auf große Mengen von starken Chemikalien verzichtet werden kann und die Herstellung wesentlich kostengünstiger und umweltschonender durchgeführt werden kann.

Erfindungsgemäß wird das Polyetherketonketon unter Verwendung von Diphenylether und Benzoldicarbonsäurederivat hergestellt. Hierbei liegt die von der Benzoldicarbonsäure stammende Gruppe im Polymer in mindestens zwei verschiedenen Modifikationen, insbesondere Isomeren, vor, wodurch der Grad der Kristallinität vermindert wird. Dieses Material weist zum Teil amorphe und zum Teil kristalline Strukturen auf, wodurch es der Sulfonierung sehr gut zugänglich ist.

In der Polymerkette befinden sich die Bindungen erfindungsgemäß vorzugsweise teilweise in para- und teilweise in meta-Stellung. Dies bewirkt die zum Teil amorphe Struktur, die für die erfindungsgemäße Sulfonierung wichtig ist. Ferner liegt hierbei ein Teil von zwischen zwei Ketogruppen liegenden Phenylengruppen in einer von der para-Stellung abweichenden Bindung vor. Dies ist die meta-Stellung, doch auch beispielsweise eine ortho-Stellung könnte in Frage kommen.

Das Benzoldicarbonsäurederivat stellt als ein Ausgangsmaterial für die Copolymerisierung ein Gemisch von mindestens zwei verschiedenen Benzoldicarbonsäurederivaten dar. Es handelt sich bei diesen Benzoldicarbonsäurederivaten zumindest um das Isophtalsäurederivat und das Terephtalsäurederivat. Ein derartig hergestelltes Copolymer stellt ein besonders geeignetes amorphes Material für die Sulfonierung dar.

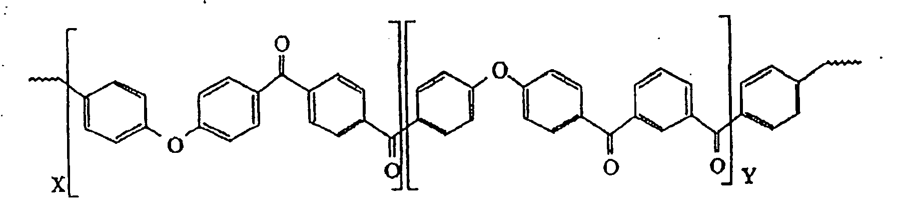

Der Anteil im Copolymer von kristallinen und amorphen Bereichen ist abhängig vom Verhältnis des eingesetzten Terephtalsäurederivates und des Isophtalsäurederivates. Die Umsetzung von Diphenylether mit aus- schließlich Terephtalsäure würde zu einem hochkristallinen linearen Polyetherketonketon führen. Ein solches Polymer ist im wesentlichen unlöslich und für eine Sulfonierung wenig geeignet. Die Umsetzung von Diphenylether und Isophtalsäure würde zu einem völlig amorphen und zumeist auch im wesentlichen niedermolekularen Polyetherketonketon führen. Ein solches Polymer hat lediglich geringe Filmbildungseigen- schaften und ist daher relativ wenig für die Membranherstellung einsetzbar. Durch das Mischungsverhältnis von Terepthalsäure und Isophtalsäure läßt sich die Kristallinität bzw. Amorphität des Copolymers einstellen und damit Parameter wie Löslichkeit und Schmelzviskosität beeinflussen. Beispielsweise führt ein Verhältnis von 60% Terephtalsäure und 40% Isophtalsäure zu einer Glastemperatur von 154 °C, einem Schmelzpunkt bei 310 °C und einer Dichte von 1,26. Das Verhältnis von 20% Terephtalsäure und 80% Isophtalsäure bewirkt eine Glastemperatur von 168°C.

Um die Polymerisationsreaktionen zu erleichtern, wird vorzugsweise ein Säurechlorid der Benzoldicarbonsäure eingesetzt. In einer bevorzugten Ausführungsform ist hierbei das Benzoldicarbonsäurederivat ein Benzoldicarbonsäuredichlorid. Doch auch andere Derivate sind durchaus von der Erfindung mitumfaßt. Es ist beispielsweise auch das Säureanhydrid als aktivierte Form der Benzoldicarbonsäure möglich.

In einer besonders bevorzugten Ausführungsform werden etwa 30 bis etwa 50 Gew.% Isophtalsäurederivat und etwa 50 bis etwa 70 Gew.% Terephtalsäurederivat eingesetzt.

Dieses Gemisch wird mit Diphenylether umgesetzt. Vorzugsweise werden etwa 1 bis etwa 3 Teile Diphenylether und etwa 1 bis etwa 3 Teile Benzoldicarbonsäurederivat verwendet. Ganz besonders bevorzugt ist ein Reaktionsansatz von einem Teil Diphenylether und einem Teil Benzoldicarbonsäurederivat. Die Verwendung von exakt äquimolaren Mengen ist besonders vorteilhaft, da hierdurch besonders hohe Molekulargewichte erzielt werden können.

Auf diese Weise können weitgehend amorphe hochmolekulare Polymere gewonnen werden, die sich überraschenderweise und erfreulicherweise in Schwefelsäure bzw. in Schwefelsäure/Oleum und anderen Lösungsmitteln wesentlich besser lösen lassen als alle bisher untersuchten Polyetherketone. Selbst grobes Pulver und/oder ungemahlenes Granulat, wie es in der Regel bei technischen Einsätzen eingesetzt wird, ist bei Verwendung der erfindungsgemäßen Copolymere bereits beispielsweise nach einigen Stunden Rühren bei Raumtemperatur im wesentlichen vollständig gelöst, wobei zunächst keine meßbare Sulfonierung stattfindet. Bei den angestrebten Reaktionszeiten von durchschnittlich 48 bis 120 Stunden verläuft der Sulfonierungsprozeß nahezu ausschließlich in homogener Phase. Der Anteil einer Prozeßführung in Schwefelsäure ist dabei annähernd 100%.

Vorteilhafterweise ist im Gegensatz zu herkömmlichen sulfonierten Polyetherketonen der Sulfonierungsgrad der erfindungsgemäßen amorphen Polyetherketonketone einstellbar. Erfindungsgemäß ist es daher möglich, durch den eingestellten Sulfonierungsgrad beispielsweise die Leitfähigkeit der herzustellenden Membran zu beeinflussen. Die Sulfonierung, die in der Regel in ortho-Stellung zur Äthergruppe erfolgt, beeinflußt weiterhin auch die Wasserlöslichkeit des Produktes. Dies kann bei der Auswahl des Sulfonierungsgrades für den jeweiligen Anwendungszweck des Produktes zu berücksichtigen sein. Die Einstellung des Sulfonierungsgrades erfolgt vorzugsweise durch das Einstellen einer entsprechenden Schwefeltrioxid-Konzentration im Reaktionsansatz. Dies kann beispielsweise dadurch geschehen, daß verschieden konzentriertes Oleum dem Ansatz zugefügt wird.

Die einfachste Monomereinheit des Polyetherketonketon hat ein Äquivalenzgewicht von 300 Da. Bei einer einfachen Sulfonierung, d.h. bei einfacher Substitution je Monomereinheit, ergibt sich ein Äquivalenzgewicht der freien Sulfonsäure von 380 Da bzw. eine lonenaustauscherkapazität von 2,63 mmol/g trockenes Polymer. Da die lsophtalsäuregruppe und die Terephtalsäuregruppe im Copolymer unterschiedlich leicht zu sulfonieren ist, erhält man in Abhängigkeit vom Mischungs-verhältnis der Benzoldicarbonsäurederivate im Copolymer ein unterschiedliches erstes Plateau der Sulfonierung. Beispielsweise erzielt man bei einem Verhältnis von 60:40 = T:I-Copolymer ein erstes Plateau der Sulfonierung bei einem Äquivalenzgewicht von 620 Da bzw. einer lonenaustauscherkapazität von 1,61 meq/g. Erfindungsgemäß ist es jedoch unproblematisch, höhere Sulfonierungsgrade zu erzielen.

Vorteilhafterweise beträgt der Sulfonierungsgrad auf etwa 0,1 bis etwa 3,0 mmol Sulfonsäure/g Polymer. Bevorzugt ist ein Sulfonierungsgrad von etwa 0,2 bis etwa 2,5 mmol Sulfonasäure/g Polymer. Für die Herstellung von Membranen für Brennstoffzellen ist ein Sulfonierungsgrad von etwa 1,0 bis etwa 2,2 mmol Sulfonsäure/g Polymer besonders geeignet. In einer weiteren bevorzugten Ausführungsform der Erfindung ist ein Sulfonierungsgrad auf etwa 0,2 oder weniger mmol Sulfonsäure/g Polymer vorgesehen. Bei herkömmlichen sulfonierten Polyetherketonen ist eine kontrollierte Einstellung von derart niedrigen Sulfonierungsgraden nicht machbar. Die dank der Erfindung nun herstellbaren niedrigen Sulfonierungsgrade können beispielsweise für Membranen als lonenaustauscher genutzt werden.

Vorteilhafterweise liegt das sulfonierte PEKK als alkohol- und/oder wasserlösliches Produkt vor. Dieses Material kann beispielsweise mit besonderem Vorteil zur Herstellung von Membranelektrodeneinheiten verwendet werden. Der für diese Verwendung bevorzugte Sulfonierungsgrad beträgt etwa 2,0 bis etwa 2,5 mmol Sulfonsäure/g Polymer, insbesondere etwa 2,3 bis etwa 2,4 mmol Sulfonsäure/g Polymer.

In einer besonders bevorzugten Ausführungsform liegt das erfindungsgemäße sulfonierte Polyetherketonketon in Form einer Membran vor. Bei einer solchen Membran kann es sich vorteilhafterweise um eine Kationenaustauschermembran und/oder einer Protonenleitermembran handeln. Es werden jedoch auch andere Membrantypen von der Erfindung umfaßt, die aus dem erfindungsgemäßen Material herstellbar sind. Die Membranen sind beispielsweise für eine Elektrodialyse, Elektrolyse, Donnandialyse sowie für den Einsatz in Batterien vorgesehen. Ganz besonders bevorzugt sind Membranen, die für die Verwendung in Brennstoffzellen einsetzbar sind. Der Einsatz von Membranen in Brennstoffzellen ist mit herkömmlichen Membranen nur in sehr begrenzten Umfang möglich, da hier extreme Anforderungen an chemische und thermische Beständigkeit der Membranen zu stellen sind. Die erfindungsgemäßen Membranen sind aufgrund ihrer einzigartigen Eigenschaften hierfür ganz besonders geeignet, insbesondere für Polymerelektrolytmembranbrennstoffzellen (PEMFC) und Direkt-Methanol-Brennstoffzellen (DMFC).

Die erfindungsgemäßen Membranen können nach herkömmlichen Methoden hergestellt sein. Beispielsweise kann das sulfonierte Polymer aus einer Lösung zu einem Film gestrichen und das Lösungsmittel verdampft werden. Ebenso kann eine Membran beispielsweise auch durch Extrusion nach bekannten Methoden hergestellt werden. Auf diese unterschiedlichen Weisen können Membranen bzw. Filme unterschiedlicher Dicke erhalten werden. Diese Dicke kann sich von wenigen µm bis zu einigen hundert µm bewegen. Der Zeitpunkt der Sulfonierung kann unterschiedlich gewählt werden. Beispielsweise kann zunächst die Membran aus PEKK hergestellt werden, beispielsweise durch eine Extrusion von Polyetherketonketon zur Folie, und im folgenden Schritt die Sulfonierung, beispielsweise durch Umsetzung mit Thionylchlorid in halogeniertem Lösungsmittel. Andererseits kann auch zunächst die Sulfonierung von Polyetherketonketon durchgeführt werden und die Herstellung der Membran im anschließenden Arbeitsschritt erfolgen.

Für manche Anwendungszwecke kann es sinnvoll sein, die erfindungsgemäße Membran nachzubehandeln. Dies kommt vor allem für Membranen in Frage, die für den Gebrauch in Brennstoffzellen vorgesehen sind.

Ein wichtiges Merkmal der erfindungsgemäßen Membranen für den Einsatz in Elektromembranverfahren und/oder Brennstoffzellen ist deren spezifischer Flächenwiderstand. Dieser kann durch die Verarbeitung, durch mögliche Gewebeverstärkungen und/oder die Membrandicke mitbestimmt werden. Ein wesentlicher Faktor hierbei ist jedoch die spezifische Leitfähigkeit des zugrundeliegenden Materials. Um zu prüfen, ob die vielfältigen Vorteile des erfindungsgemäßen sulfonierten Polyetherketonketons hinsichtlich chemischer und thermischer Beständigkeit, besserer mechanischer Stabilität und geringerer Kosten einen erhöhten Widerstand der Membran mit sich bringen, wurden Vergleichs- filme nahezu identischer lonenaustauscherkapazität hergestellt. Überraschender- und erfreulicherweise konnte beim Vergleich dieser Membranen gezeigt werden, daß für das erheblich stabilere erfindungsgemäße amorphe Polyetherketonketon bei gleicher Festladungsdichte dieselbe spezifische Leitfähigkeit verglichen mit den herkömmlichen Polyaryletherketonen gemessen werden konnte.

In einer besonders bevorzugten Ausführungsform der Erfindung handelt es sich bei den Membranen um Blendmembranen. Hierbei ist also das sulfonierte Polyetherketonketon mit einem anderen Material gemischt, um so bestimmte Eigenschaften der fertigen Membran zu erreichen. Als zusätzliches Material kommen eine Vielzahl von Substanzen in Frage. Besonders bevorzugt ist beispielsweise Polyphenylenethersulfon. Ein Blend von sPEKK mit Polyphenylenethersulfon kann als Laugeblockermembran eingesetzt werden. Eine solche Blendmembran hat auch weiterhin den Vorteil, daß eine Quellung reduziert werden kann und/oder daß die mechanische Festigkeit der resultierenden Membran verbessert sein kann. In einer weiteren bevorzugten Ausführungsform der Erfindung stellt die Membran einen Blend von sPEKK mit Polysulfon dar. Weiterhin werden Blends von sPEKK mit verschiedenen Mischoxiden von der Erfindung umfaßt. Hierzu zählen beispielsweise Blends von sPEKK mit dispergierter Kieselsäure (Silika) oder mit in-situ hergestellten Silikaten aus Tetraethoxysilikat (TEOS) oder Aminophenyltrimethoxysilan/Tetraethoxysilikat (APTMOS TEOS). In einer weiteren bevorzugten Ausführungsform ist die Membran ein Blend von sPEKK mit Heteropolysäuren.

In einer weiteren bevorzugten Ausführungsform stellt die erfindungsgemäße Membran einen Blend von sPEKK mit Zirkoniumsulfophenylphosphonat, insbesondere mit amorphem Zirkoniumsulfophenylphosphonat, dar. Weiterhin werden von der Erfindung Blends von sPEKK mit Zirkoniumphosphaten und insbesondere mit delaminierten Zirkoniumphosphaten umfaßt.

In einer besonders bevorzugten Ausführungsform der Erfindung ist die Membran als eine mehrschichtige Membran, also eine sogenannte Multilayer-Membran ausgebildet. Vorzugsweise weisen die unterschiedlichen Schichten der Membran verschiedene lonenaustauscherkapazitäten auf. Dies kann beispielsweise zur Zurückhaltung von Lauge, also als Basenblocker beispielsweise für die Elektrodialyse, ausgenutzt werden. Weiterhin können so das Methanoldrag in Direktmethanolbrennstoffzellen reduziert werden. Weiterhin können durch solche Membranen der Wasserhaushalt in Brennstoffzellen, z.B. PEMFC, optimiert werden.

In einer weiteren bevorzugten Ausführungsform ist die Multilayer-Membran aus sPEKK und anderen lonomeren hergestellt. Beispielsweise dienen Modifikationen von sPEKK mit Perfluorsulfonsäurepolymeren zur Verbesserung der Oxidationsstabilität. Bei einer Elektrolyse kann so beispielsweise die anodische Oxidation verhindert werden und ein Schutz vor einem Chlorangriff gewährleistet werden. Bei Membranen für Brennstoffzellen kann so die Kathode vor einem Angriff vor Hydroxylradikalen geschützt werden. Bei Membranen für eine Elektrodialyse können hierdurch oxidative Medien, insbesondere Chromat, konzentriert werden.

In einer weiteren besonders bevorzugten Ausführungsform der Erfindung stellt die Membran auf Basis von sPEKK eine Multimatrix-Membran dar. Hierbei können beispielsweise die Poren einer Kernspur-Membran auf Basis von PET-Folien (Polyethylentherephthalat) mit sPEKK gefüllt sein. Weiterhin können in entsprechender Weise die Poren einer PVDF(Polyvinylendifluorid)-Mikrofiltrations-membran mit sPEKK gefüllt sein. Auf diese Weise können Membranen hergestellt werden, die verschiedene Eigenschaften in sich vereinigen.

In einer ganz besonders bevorzugten Ausführungsform der Erfindung handelt es sich bei den erfindungsgemäßen Membranen um mechanisch verstärkte Membranen. Die Verstärkung kann beispielsweise ein monofiles Gewebe auf der Basis von Polyetheretherketon (PEEK) und/oder auf der Basis von Polyester und/oder Polyamid sein. Weiterhin kann es sich dabei um ein Multifilament-Gewebe handeln. Besonders bevorzugt hierbei ist eine Verstärkung auf der Basis von Glasfasergewebe und/oder auf der Basis von Polyimid-Multifilament. In einer weiteren bevorzugten Ausführungsform ist die erfindungsgemäße Membran mit einem Vliesstoff, insbesondere einem nicht gewebten Vliesstoff, verstärkt. Dies kann beispielsweise durch die Verstärkung mit einem Polypropylen-Vlies verwirklicht sein.

In einer weiteren bevorzugten Ausführungsform der Erfindung ist die erfindungsgemäße Membran auf Basis von sPEKK mit Katalysator beschichtet. Hierbei kann der Katalysator beispielsweise zunächst in einem sPEKKlonomeren oder in einer Lösung aus Perfluorsulfonsäure in Isopropanol dispergiert sein.

In einer weiteren bevorzugten Ausführungsform der Erfindung handelt es sich bei der erfindungsgemäßen Membran um ein vernetztes Material auf Basis von amorphem sPEKK. Dies kann durch eine Vielzahl verschiedener Herstellungsverfahren erreicht werden. Beispielsweise durch gemeinsames Erhitzen mit para-Phenylendiamin, durch Erhitzen mit Dibenzoylperoxid unter Schutzgas, durch Erhitzen der Membran in Schwefeltrioxid-Atmosphäre, durch Erhitzen in SO₂Cl₂ -Atmosphäre oder durch thermische Nachbehandlung mit Dicylohexylcarbodimid (DCC) im Vakuum.

Vorteilhafterweise kann es sich bei der erfindungsgemäßen Membran um eine makroporöse Membran handeln. Diese kann beispielsweise durch Trocken-Naß-Phaseninversion hergestellt sein.

In einer weiteren bevorzugten Ausführungsform der Erfindung liegt das sulfonierte Polyetherketonketon als Mischung mit mindestens einem weiteren Inhaltsstoff vor. Bei dem weiteren Inhaltsstoff kann es sich um ganz verschiedene Substanzen handeln, beispielsweise um andere Ionomere. Diesbezüglich wird auf das oben Gesagte Bezug genommen.

Ferner umfaßt die Erfindung eine Brennstoffzelle, die das erfindungsgemäße sPEKK in Form einer Membran aufweist. Bezüglich der Eigenschaften dieser Membran wird auf die obige Beschreibung verwiesen. Bei den Brennstoffzellen handelt es sich vorzugsweise um DMFC oder PEMFC. In einer besonders bevorzugten Ausführungsform der Brennstoffzelle weist die Brennstoffzelle, insbesondere eine DMFC, eine Mehrschichtmembran auf.

Weiterhin wird von der Erfindung ein Verfahren zur Herstellung von sulfoniertem Polyetherketonketon umfaßt. Dieses Verfahren zeichnet sich dadurch aus, daß amorphes Polyetherketonketon sulfoniert wird. Bezüglich der Einzelheiten dieses Verfahrens wird auf das oben Gesagte verwiesen.

In einer bevorzugten Ausführungsform der Erfindung findet die Sulfonierung des Copolymers unter Verwendung mindestens eines Lösungsmittels und/oder mindestens eines Sulfonierungsmittels statt. Als Lösungsmittel kann beispielsweise Schwefelsäure eingesetzt werden. Ein besonderer Vorteil der vorliegenden Erfindung ist jedoch, daß auch andere Lösungsmittel, ins- besondere halogenisierte Lösungsmittel, verwendet werden können. Nichtsulfonierende Lösungsmittel werden in Kombination mit mindestens einem Sulfonierungsmittel eingesetzt. Ein besonders geeignetes Lösungsmittel für die Sulfonierung ist Methylenchlorid.

Bei der Erfindung kann als Sulfonierungsmittel Oleum eingesetzt werden. Hierunter ist "rauchende Schwefelsäure" zu verstehen, also konzentrierte Schwefelsäure, die noch wechselnde Mengen von Schwefeltrioxid enthält. Ein besonderer Vorteil der Erfindung ist jedoch, daß aufgrund der teilweise amorphen Struktur der Copolymere auch schwächere Sulfonierungsmittel wirksam sind. Selbstverständlich können auch andere geeignete Sulfonierungsmittel zum Einsatz kommen.

Darüber hinaus umfaßt die Erfindung sulfoniertes Polyetherketonketon, das dadurch gekennzeichnet ist, daß es durch ein Verfahren herstellbar ist, wie es bereits hier beschrieben ist. Außerdem umfaßt die Erfindung die Verwendung von sulfoniertem amorphen PEKK zur Herstellung von Membranen, insbesondere von Kationenaustauschermembranen und/oder Protonenleitermembranen. Zusätzlich umfaßt die Erfindung die Verwendung von sulfoniertem amorphen PEKK zur Herstellung einer Polymermischung.
Weitere Einzelheiten der Erfindung ergeben sich aus der Beschreibung der nachfolgenden Beispiele in Verbindung mit den Unteransprüche. Hierbei können die Merkmale jeweils für sich oder in Kombination miteinander verwirklicht sein.

### BEISPIELE

### Beispiel 1 (Sulfonierung mit Oleum)

In einem temperierbaren 250ml-Rührgefäß werden zu 60 ml Schwefelsäure (96,38 Gew.% H₂SO₄) unter starkem Rühren portionsweise 10 g amorphes PEKK (Pulver; bei 60°C i.V. über P₂O₅ getrocknet) zugesetzt. Unter Gelbfärbung geht das Polymer innerhalb etwa einer Stunde rückstandsfrei in Lösung. Die Lösung wird zur Äquilibrierung weitere 12 Stunden bei Raumtemperatur gerührt und schließlich 40 ml von 25%igem Oleum (resultierende SO₃₋Konzentration: 0,73 Gew.%) zugegeben. Die erste Sulfonierung wird mit der Zugabe von freiem SO₃ beobachtet. Bis zum Reaktionsabbruch durch Einrühren in die 10- bis 20-fache Menge entionisierten Wassers ist nur noch mäßiges Rühren erforderlich. Das fadenförmige Produkt wird nach 24stündiger Aufbewahrung unter Wasser abgesaugt und dann mit Wasser gewaschen. Dieser Vorgang wird dreimal wiederholt. Das Material wird zunächst im Umlufttrockenschrank bei 60°C und zum Schluß genau wie das Ausgangsmaterial über P₂O₅ getrocknet.

Zur Beurteilung der Löslichkeit und Bestimmung des Substitutionsgrades werden 50 bis 100 mg des sulfonierten Materials eingewogen und mit 20 ml N-Methylpyrrolidon versetzt. Gelöste oder stark gequollene Proben werden schließlich mit 60 ml Wasser verdünnt und mit 0,1 n NaOH titriert. So führt die Sulfonierung mit 0,73 Gew.% freiem SO₃ bei 45 °C nach 48 Stunden zu einem Subsitutionsgrad (IEC) von 1,04 mmol/g.

Proben mit Substitutionsgraden IEC >= 0,75 mmol/g sind verhältnismäßig gut in N-Methylpyrrolidon oder Dimethylacetamid löslich. Bei Materialien mit IEC-Werten unter 1,6 mmol/g bleibt der Grad der Quellung in Wasser noch in akzeptablen Grenzen. Trockenes Material mit Sulfonsäuregehalten in den Grenzen von 1,0 bis 2,0 mmol/g ist deutlich gelb gefärbt.

**Tabelle 1:**

| Sulfonierung von amorphem PEKK mit 0,73 Gew.% freiem SO₃ in 96 Gew.% Schwefelsäure | | |
|---|---|---|
| Reaktionstemperatur [°C] | Reaktionsdauer [h] | Substitution [mmol/g] |
| 45 | 48 | 1,08 |
| 45 | 72 | 1,31 |
| 45 | 96 | 1,61 |
| 45 | 120 | 1,99 |

### Beispiel 2 (Sulfonierung mit Oleum)

In einem temperierbarem Hängegefäß werden zu 780 ml Schwefelsäure (96,38 Gew.% H₂SO₄) unter starkem Rühren portionsweise 100 g amorphes PEKK (Pulver; bei 60 °C i.V. über P₂O₅ getrocknet) zugesetzt. Unter Gelbfärbung geht das Polymer innerhalb etwa einer Stunde rückstandsfrei in Lösung. Die Lösung wird zur Äquilibrierung weitere 12 Stunden bei Raumtemperatur gerührt und schließlich 225 ml von 65%igem Oleum (resultierende SO₃₋Konzentration: 3,7 Gew.%) zugegeben. Die erste Sulfonierung wird mit der Zugabe von freiem SO₃ beobachtet. Bis zum Reaktionsabbruch durch Zugabe von 300 ml Schwefelsäure ist nur noch mäßiges Rühren erforderlich. Das Produkt wird fadenförmig in Wasser gefällt und gewaschen. Das Material wird zunächst im Umlufttrockenschrank bei 60°C und zum Schluß genau wie das Ausgangsmaterial getrocknet.

**Tabelle 2:**

| Sulfonierung von amorphem PEKK mit 3,7 Gew.% freies SO₃ in 96 Gew.% Schwefelsäure | | |
|---|---|---|
| Reaktionstemperatur [°C] | Reaktionsdauer [h] | Substitution [mmol/g] |
| 20 | 39 | 1,04 |
| 20 | 54 | 1,28 |
| 20 | 72 | 1,59 |

### Beispiel 3 (Sulfonierung mit Chlorsulfonsäure)

100 g PEKK (Feinpulver) werden im Rührgefäß mit der Hauptmenge des Methylenchlorids suspendiert. Unter heftigem Rühren werden zügig 150 ml Chlorsulfonsäure zusammen mit dem restlichem Methylenchlorid (insgesamt 450 ml) zugegeben. Nach anfänglicher, kurzzeitiger Viskositätserhöhung wird die gelb gefärbte Masse wieder niedriger viskos. Der Ansatz wird homogen und bleibt dies auch über die gesamte Versuchsdauer. Selbst ungemahlenes Granulat geht in maximal 15 Minuten vollständig in Lösung. Die Fällung mit 150 ml Ethanol erfolgt unter Kühlung. Dabei entsteht eine dicke, hochviskose Polymermasse, die jedoch problemlos gewaschen und isoliert werden kann.

Das in den Beispielen 1 bis 3 eingesetzte amorphe PEKK hatte ein Verhältnis von Isophtalsäure- zu Therephtalsäuregruppen von 40:60.

**Tabelle 3:**

| Kostenoptimierte Sulfonierung von amorphem PEKK mit Chlorsulfonsäure und Methylenchlorid in homogener Phase | | |
|---|---|---|
| Reaktionstemperatur [°C] | Reaktionsdauer [h] | Substitution [mmol/g] |
| 10 | 2 | 0,92 |
| 10 | 6 | 1,53 |
| 20 | 2 | 1,30 |
| 20 | 4 | 1,86 |
| 25 | 2 | 1,52 |

### Beispiel 4: (Herstellung einer Membran aus sPEKK)

Zur Herstellung von Protonenleitermembranen oder Kationen- austauschermembranen PEKK werden 860g N-Methylpyrrolidon bei -10 °C vorgelegt und unter Rühren etwa 140 g sulfoniertes PEKK (IEC = 1,59 mmol/g) eingerührt. Dann wird unter Schutzgas langsam erwärmt. Der Rührkesselreaktor wird bei 140 °C verschlossen und schließlich bei 180 °C bis zur vollständigen Auflösung weiter dispergiert. Nach Abkühlen auf 80 °C wird die klare, leicht gelbliche Lösung über 3 µm Glasfaservlies filtriert und auf der Beschichtungsanlage zu einem 350 µm Film ausgestrichen. Nach Abdampfen des Lösungsmittels bei 80 °C, 125 °C, 160 °C wird ein gelblicher Film mit einer Dicke von etwa 50 µm erhalten.

**Tabelle 4:**

| Elektrochemische Charakterisierung unterschiedlicher Polyetherketonketon-Membranen | | | |
|---|---|---|---|
| | PEKK 1 | PEKK 2 | PEKK 3 |
| lonenaustauscher- Kapazität (mmol/g) | 1,04 | 1,28 | 1,59 |
| Titrimetrische IEC (mmol/g) | 0,86 | 1,17 | 1,35 |
| Permselektivität (0,5/0,1 M KCl, %) | 97,67 | | 97,94 |
| Spez.Leitfähigkeit (0,5 M NaCl, S/cm) | 0,28 x 10⁻³ | 2,8 x 10⁻³ | 3,28 x 10⁻³ |
| Quellung (Gew.-%) | 17,03 | 27,69 | 37,19 |

### Beispiel 5

Die entsprechend Beispiel 4 hergestellten Membranen werden für die Anwendung in Brennstoffzellen einer Nachbehandlung unterzogen. Dazu wird die Membran zunächst in 80°C in 2M H₂SO₄ während 2 Stunden konditioniert und schließlich während 5 Stunden in vollentsalztem Wasser gekocht.

**Tabelle 5:**

| Elektrochemische Charakterisierung nachbehandelter Polyetherketonketon-Membranen | | | |
|---|---|---|---|
| | PEKK 1 | PEKK 2 | PEKK 3 |
| lonenaustauscher-Kapazität (mmol/g) | 1,04 | 1,28 | 1,59 |
| Titrimetrische IEC (mmol/g) | 0,85 | 1,13 | 1,20 |
| Permselektivität (0,5/0,1 M KCl, %) | 87,40 | | 55,31 |
| Spez.Leiffähigkeit (0,5 M NaCl, S/cm) | 0,97 x 10⁻³ | 5,8 x 10⁻³ | 31,30 x 10⁻³ |
| Quellung (Gew.-%) | 20,03 | 35,47 | 140,90 |

### Beispiel 6

Zur Herstellung von sPEKK Blendmembranen werden 820 g N-Methylpyrrolidon bei -10 °C vorgelegt und unter Rühren etwa 36 g eines Polyarylethersulfon (RADEL^{R}) und 144 g sulfoniertes PEKK (IEC = 1,28 mmol/g) eingerührt. Dann wird unter Schutzgas langsam erwärmt. Der Rührkesselreaktor wird bei 140 ° verschlossen und schließlich bei 180 ° bis zur vollständigen Auflösung weiter dispergiert. Nach Abkühlen auf 80 °Cwird die klare, leicht gelbliche Lösung über 3 µm Glasfaservlies filtriert und auf der Beschichtungsanlage zu einem 300 µm Film ausgestrichen. Nach Abdampfen des Lösemittels bei 80 °C, 115 °C, 140 °C wird ein gelblicher Film mit einer Dicke von etwa 55 µm erhalten.

**Tabelle 6:**

| Elektrochemische Charakterisierung Polyetherketonketon/Polyethersulfon Blendmembranen für die Elektrodialyse und Brennstoffzellen-Anwendungen | | | |
|---|---|---|---|
| | PEKK 2 | PEKK 4 | PEKK 5 |
| Anteil an PPSU (Gew.-%) | 0 | 14 | 20 |
| Titrimetrische IEC (mmol/g) | 1,17 | 1,01 | 0,86 |
| Spez.Leitfähigkeit (0,5 M NaCl, S/cm) | 2,80 x 10⁻³ | 2,00 x 10⁻³ | 1,40 x 10⁻³ |
| Quellung (Gew.-%) | 27,69 | 22,28 | 17,05 |

### Beispiel 7

Zur Herstellung einer Membran für die Direktmethanol- brennstoffzelle (DMFC) werden 890 g N-Methylpyrrolidon bei -10 °C vorgelegt und unter Rühren etwa 105 g sulfoniertes PEKK (IEC = 1,04 mmol/g) und 5 g Polyphenylethersulfon RADEL^{R} eingerührt. Dann wird unter Schutzgas langsam erwärmt. Der Rührkesselreaktor wird bei 160 °C verschlossen und schließlich bei 210 °C bis zur vollständigen Auflösung weiter dispergiert. Nach Abkühlen auf 80 °C wird die klare, leicht gelbliche Lösung über 5 µm Glasfaservlies filtriert und auf der Beschichtungsanlage zu einem 600 µm Film ausgestrichen. Nach Abdampfen des Lösungsmittels bei 80 °C, 125 °C, 180 °C wird ein gelblicher Film mit einer Dicke von etwa 65 µm erhalten.

Für die Anwendung in einer DMFC sind insbesondere das Wassermanagement und die Methanolmitführung von entscheidender Bedeutung. Die wie in diesem Beispiel erhaltene Membran weist bei einer Quellung in deionisiertem Wasser von 9 Gew.% eine spezifische Leitfähigkeit von 0,15 x 10⁻³ S/cm bei 20 °C auf. Unter Permeationsbedingungen in das Vakuum (Pervaporation) sinkt die Methanolstoffstromdichte gegenüber einer Vergleichsmembran auf Basis Nafion N 112 um annähernd den Faktor 10 ab.

### Beispiel 8

Für die Herstellung einer Multilayer-Membran für die DMFC wird eine etwa 8 Gew.% Lösung sulfoniertes PEKK (IEC = 1,04 mmol/g) zu einem 150 µm Film ausgestrichen und bei 190 °C abgedampft und thermisch fixiert. Auf den vorgefertigten Film wird dann eine 16 Gew.% Lösung sulfoniertes PEKK (IEC = 1,58 mmol/g) zu einem 300 µm Film aufgestrichen und wiederum mit hoher Umluftgeschwindigkeit bei 110 °C abgedampft und schließlich bei 150 °C verfestigt.

Die in diesem Beispiel erhaltene Membran weist bei einer Quellung in deionisiertem Wasser von 15 Gew.% eine spezifische Leitfähigkeit von 3,1 x 10⁻³ S/cm bei 20 °C auf. Unter Permeationsbedingungen in das Vakuum (Pervaporation) sinkt die Methanolstoffstromdichte gegenüber einer Vergleichsmembran auf Basis Nafion N 112 um annähernd den Faktor 7 ab.

### Beispiel 9

Für die Herstellung einer Multilayer-Membran für die PEMFC wird eine etwa 14 Gew.% Lösung sulfoniertes PEKK (IEC = 1,59 mmol/g) zu einem 350 µm Film ausgestrichen, abgedampft und bei 140 °C thermisch fixiert. Auf den vorgefertigten Film wird dann die 10 Gew.% Lösung einer Perfluorsulfonsäure PFSA (EW = 900 g/mol) in iso-Propanol zu einem 100 µm Film aufgestrichen und mit geringer Umluftgeschwindigkeit bei 70 °C abgedampft und schließlich bei 210 °C verfestigt.

Die wie in diesem Beispiel erhaltene Membran weist bei einer Quellung in deionisiertem Wasser von 23 Gew.% eine spezifische Leitfähigkeit von 4,5 x 10⁻³ S/cm bei 20 °C auf. Für den Einsatz in Brennstoffzellen wird die PFSAbeschichtete Seite der Membran zur Kathode eingebaut. Damit wird einerseits die Standzeit der Membran verbessert, andererseits die Selbstbefeuchtung des lonomeren durch die äußerst hydrophile PFSA verbessert.

## Patentansprüche

1. Sulfoniertes Polyetherketonketon, welches amorph ist und/oder durch Sulfonierung von amorphem Polyetherketonketon erhältlich ist, wobei das sulfonierte Polyetherketonketon unter Verwendung von Diphenylether und Benzoldicarbonsäurederivat und Sulfonierung herstellbar ist, und wobei das Benzoldicarbonsäurederivat ein Gemisch von mindestens zwei verschiedenen Benzoldicarbonsäurederivaten, zumindest von Isophtalsäurederivat und Terephtalsäurederivat, ist, wobei beim sulfonierten Polyetherketonketon ein Teil von zwischen zwei Ketogruppen liegenden Phenylengruppen in einer von der para-Stellung abweichenden meta-Stellung vorliegt und wobei das Gemisch etwa 10 bis etwa 60 % Isophtalsäurederivat und etwa 40 bis etwa 90 % Terepthalsäurederivat enthält.

2. Sulfoniertes Polyetherketonketon nach Anspruch 1, **dadurch gekennzeichnet, daß** das Benzoldicarbonsäurederivat ein Benzoldicarbonsäuredichlorid ist.

3. Sulfoniertes Polyetherketonketon nach Anspruch 1 oder 2, **dadurch gekennzeichnet, daß** das Gemisch etwa 30 bis 50 % Isophtalsäurederivat und etwa 50 bis 70 % Terepthalsäurederivat enthält.

4. Sulfoniertes Polyetherketonketon nach einem der Ansprüche 1 bis 3, **dadurch gekennzeichnet, daß** etwa 1 bis etwa 3 Teile, insbesondere etwa 1 Teil, Diphenylether und etwa 1 bis etwa 3 Teile, insbesondere etwa 1 Teil, Benzoldicarbonsäurederivat verwendet ist.

5. Sulfoniertes Polyetherketonketon nach einem der vorhergehenden Ansprüche, **dadurch gekennzeichnet, daß** der Sulfonierungsgrad auf etwa 0,1 bis etwa 3,0 mmol Sulfonsäure/g Polymer, insbesondere etwa 0,2 bis etwa 2,5 mmol Sulfonsäure/g Polymer, eingestellt ist.

6. Sulfoniertes Polyetherketonketon nach Anspruch 5, **dadurch gekennzeichnet, daß** der Sulfonierungsgrad auf etwa 1,0 bis etwa 2,2 mmol Sulfonsäure/g Polymer eingestellt ist.

7. Sulfoniertes Polyetherketonketon nach Anspruch 5, **dadurch gekennzeichnet, daß** der Sulfonierungsgrad auf etwa 0,2 oder weniger mmol Sulfonsäure/g Polymer eingestellt ist.

8. Sulfoniertes Polyetherketonketon nach einem der vorhergehenden Ansprüche, **dadurch gekennzeichnet, daß** es in Form einer Membran vorliegt.

9. Sulfoniertes Polyetherketonketon nach Anspruch 8, **dadurch gekennzeichnet, daß** die Membran eine Kationenaustauschermembran und/oder eine Protonenleitermembran ist.

10. Sulfoniertes Polyetherketonketon nach Anspruch 8 oder Anspruch 9, **dadurch gekennzeichnet, daß** die Membran eine solche für Brennstoffzellen ist, insbesondere für PEMFC oder DMFC.

11. Sulfoniertes Polyetherketonketon nach einem der Ansprüche 8 bis 10, **dadurch gekennzeichnet, daß** die Membran eine solche für Elektrodialyse, Elektrolyse und/oder Batterien ist.

12. Sulfoniertes Polyetherketonketon nach einem der Ansprüche 8 bis 11, **dadurch gekennzeichnet, daß** die Membran ein Blend von sulfoniertem Polyetherketonketon mit Polyphenylenethersulfon und/oder Polysulfon und/oder Mischoxiden, insbesondere Kieselsäure, Silikaten aus TEOS und/oder APTMOS/TEOS, und/oder Heteropolysäuren und/oder Zirkoniumsulfophenylphosphonat, insbesondere amorphes Zirkoniumsulfophenylphosphonat, und/oder Zirkoniumphosphat, insbesondere delaminiertes Zirkoniumphosphat, ist.

13. Sulfoniertes Polyetherketonketon nach einem der Ansprüche 8 bis 12, **dadurch gekennzeichnet, daß** die Membran eine Mehrschichtmembran mit anderen lonomeren, insbesondere mit Perfluorsulfonsäure, ist.

14. Sulfoniertes Polyetherketonketon nach einem der Ansprüche 8 bis 13, **dadurch gekennzeichnet, daß** die Membran eine Multimatrix-Membran und/oder eine mechanisch verstärkte Membran und/oder eine beschichtete, insbesondere mit Katalysator beschichtete, Membran, und/oder eine makroporöse Membran und/oder eine vernetzte Membran, insbesondere eine vernetzte Protonenleitermembran, ist.

15. Sulfoniertes Polyetherketonketon nach einem der Ansprüche 1 bis 11, **dadurch gekennzeichnet, daß** es als Mischung mit mindestens einem weiteren Inhaltsstoff vorliegt.

16. Brennstoffzelle, **dadurch gekennzeichnet, daß** sie mindestens zum Teil aus sulfoniertem Polyetherketonketon gemäß einem der Ansprüche 8 bis 14 besteht.

17. Verfahren zur Herstellung von sulfoniertem Polyetherketonketon nach einem der vorhergehenden Ansprüche, **dadurch gekennzeichnet, daß** amorphes Polyetherketonketon sulfoniert wird , wobei das sulfonierte Polyetherketonketon unter Verwendung von Diphenylether und Benzoldicarbonsäurederivat hersestellt wird, und wobei das Benzoldicarbonsäurederivat ein Gemisch von mindestens zwei verschiedenen Benzoldicarbonsäurederivaten, zumindest von Isophtalsäurederivat und Terephtalsäurederivat, ist und etwa 10 bis etwa 60 % Isophtalsäurederivat und etwa 40 bis etwa 90 % Terepthalsäurederivat enthält.

18. Verfahren nach Anspruch 17, **dadurch gekennzeichnet, daß** das Benzoldicarbonsäurederivat ein Benzoldicarbonsäuredichlorid ist.

19. Verfahren nach Anspruch 17 oder 18, **dadurch gekennzeichnet, daß** das Gemisch insbesondere etwa 30 bis etwa 50 % Isophtalsäurederivat und insbesondere etwa 50 bis etwa 70 % Terepthalsäurederivat, enthält.

20. Verfahren nach einem der Ansprüche 17 bis 19, **dadurch gekennzeichnet, daß** etwa 1 bis etwa 3 Teile, insbesondere etwa 1 Teil, Diphenylether und etwa 1 bis etwa 3 Teile, insbesondere etwa 1 Teil, Benzoldicarbonsäurederivat verwendet werden.

21. Verfahren nach einem der Ansprüche 17 bis 20, **dadurch gekennzeichnet, daß** die Sulfonierung unter Verwendung mindestens eines Lösungsmittels und/oder mindestens eines Sulfonierungsmittels durchgeführt wird.

22. Verfahren nach Anspruch 21, **dadurch gekennzeichnet, daß** als Lösungsmittel ein halogenisiertes Lösungsmittel verwendet wird.

23. Verfahren nach Anspruch 21 oder 22, **dadurch gekennzeichnet, daß** als Sulfonierungsmittel Chlorsulfonsäure verwendet wird.

24. Sulfoniertes Polyetherketonketon nach einem der Ansprüche 1 bis 7, **dadurch gekennzeichnet, daß** es nach dem Verfahren nach einem der Ansprüche 17 bis 23 herstellbar ist.

25. Verwendung von sulfoniertem amorphem Polyetherketonketon, nach einem der Ansprüche 1 bis 7 zur Herstellung von Membranen.

26. Verwendung nach Anspruch 25, **dadurch gekennzeichnet, daß** die Membranen Kationenaustauschermembranen und/oder Protonenleitermembranen sind.

27. Verwendung von sulfoniertem amorphem Polyetherketonketon nach einem der Ansprüche 1 bis 7 zur Herstellung einer Polymermischung.

## Claims

1. Sulphonated polyether ketone ketone which is amorphous and/or is obtainable by sulphonation of amorphous polyether ketone ketone wherein the sulphonated polyether ketone ketone can be prepared using diphenyl ether and a benzenedicarboxylic acid derivative and sulphonation, with the benzenedicarboxylic acid derivative being a mixture of at least two different benzenedicarboxylic acid derivatives, at least of an isophthalic acid derivative and a terephthalic acid derivative, and some of the phenylene groups present between two keto groups in the sulphonated polyether ketone ketone are present in a meta position different from the para position and the mixture contains from about 10 to about 60% of isophthalic acid derivative and from about 40 to about 90% of terephthalic acid derivative.

2. Sulphonated polyether ketone ketone according to Claim 1, **characterized in that** the benzenedicarboxylic acid derivative is a benzenedicarboxylic acid dichloride.

3. Sulphonated polyether ketone ketone according to Claim 1 or 2, **characterized in that** the mixture contains from about 30 to 50% of isophthalic acid derivative and from about 50 to 70% of terephthalic acid derivative.

4. Sulphonated polyether ketone ketone according to any of Claims 1 to 3, **characterized in that** from about 1 to about 3 parts, in particular about 1 part, of diphenyl ether and from about 1 to about 3 parts, in particular about 1 part, of benzenedicarboxylic acid derivative are used.

5. Sulphonated polyether ketone ketone according to any of the preceding claims, **characterized in that** the degree of sulphonation has been set to from about 0.1 to about 3.0 mmol of sulphonic acid/g of polymer, in particular from about 0.2 to about 2.5 mmol of sulphonic acid/g of polymer.

6. Sulphonated polyether ketone ketone according to Claim 5, **characterized in that** the degree of sulphonation has been set to from about 1.0 to about 2.2 mmol of sulphonic acid/g of polymer.

7. Sulphonated polyether ketone ketone according to Claim 5, **characterized in that** the degree of sulphonation has been set to about 0.2 or fewer mmol of sulphonic acid/g of polymer.

8. Sulphonated polyether ketone ketone according to any of the preceding claims, **characterized in that** it is in the form of a membrane.

9. Sulphonated polyether ketone ketone according to Claim 8, **characterized in that** the membrane is a cation-exchange membrane and/or a proton-conducting membrane.

10. Sulphonated polyether ketone ketone according to Claim 8 or Claim 9, **characterized in that** the membrane is a membrane for fuel cells, in particular for PEMFCs or DMFCs.

11. Sulphonated polyether ketone ketone according to any of Claims 8 to 10, **characterized in that** the membrane is a membrane for electrodialysis, electrolysis and/or batteries.

12. Sulphonated polyether ketone ketone according to any of Claims 8 to 11, **characterized in that** the membrane is a blend of sulphonated polyether ketone ketone with polyphenylene ether sulphone and/or polysulphone and/or mixed oxides, in particular silica, silicates derived from TEOS and/or APTMOS/TEOS, and/or heteropolyacids and/or zirconium sulphophenylphosphonate, preferably amorphous zirconium sulphophenylphosphonate, and/or zirconium phosphate, in particular delaminated zirconium phosphate.

13. Sulphonated polyether ketone ketone according to any of Claims 8 to 12, **characterized in that** the membrane is a multilayer membrane with other ionomers, in particular with perfluorosulphonic acid.

14. Sulphonated polyether ketone ketone according to any of Claims 8 to 13, **characterized in that** the membrane is a multimatrix membrane and/or a mechanically reinforced membrane and/or a coated, in particular catalyst-coated, membrane and/or a macroporous membrane and/or a crosslinked membrane, in particular a crosslinked proton-conducting membrane.

15. Sulphonated polyether ketone ketone according to any of Claims 1 to 11, **characterized in that** it is present as a mixture with at least one further constituent.

16. Fuel cell, **characterized in that** it consists at least partly of sulphonated polyether ketone ketone according to any of Claims 8 to 14.

17. Process for preparing sulphonated polyether ketone ketone according to any of the preceding claims, **characterized in that** amorphous polyether ketone ketone is sulphonated with the sulphonated polyether ketone ketone being prepared using diphenyl ether and a benzenedicarboxylic acid derivative and the benzenedicarboxylic acid derivative being a mixture of at least two different benzenedicarboxylic acid derivatives, at least of an isophthalic acid derivative and a terephthalic acid derivative, and containing from about 10 to about 60% of isophthalic acid derivative and from about 40 to about 90% of terephthalic acid derivative.

18. Process according to Claim 17, **characterized in that** the benzenedicarboxylic acid derivative is a benzenedicarboxylic acid dichloride.

19. Process according to Claim 17 or 18, **characterized in that** the mixture contains in particular from about 30 to about 50% of isophthalic acid derivative and preferably from about 50 to about 70% of terephthalic acid derivative.

20. Process according to any of Claims 17 to 19, **characterized in that** from about 1 to about 3 parts, in particular about 1 part, of diphenyl ether and from about 1 to about 3 parts, in particular about 1 part, of benzenedicarboxylic acid derivative are used.

21. Process according to any of Claims 17 to 20, **characterized in that** the sulphonation is carried out using at least one solvent and/or at least one sulphonating agent.

22. Process according to Claim 21, **characterized in that** a halogenated solvent is used as solvent.

23. Process according to Claim 21 or 22, **characterized in that** chlorosulphonic acid is used as sulphonating agent.

24. Sulphonated polyether ketone ketone according to any of Claims 1 to 7, **characterized in that** it can be prepared by the process according to any of Claims 17 to 23.

25. Use of sulphonated amorphous polyether ketone ketone according to any of Claims 1 to 7 for producing membranes.

26. Use according to Claim 25, **characterized in that** the membranes are cation-exchange membranes and/or proton-conducting membranes.

27. Use of sulphonated amorphous polyether ketone ketone according to any of Claims 1 to 7 for producing a polymer blend.

## Revendications

1. Polyéthercétonecétone sulfonée, qui est amorphe et/ou peut être obtenue par sulfonation d'une polyéthercétonecétone amorphe, la polyéthercétonecétone sulfonée pouvant être préparée par utilisation de diphényléther et d'un dérivé de l'acide benzènecarboxylique et par sulfonation, le dérivé de l'acide benzènedicarboxylique étant un mélange d'au moins deux dérivés différents de l'acide benzènedicarboxylique, d'au moins un dérivé de l'acide isophtalique et d'un dérivé de l'acide téréphtalique, où, dans la polyéthercétonecétone sulfonée, une partie des groupes phényle se trouvant entre deux groupes céto est présente sur une position méta différente de la position para, et le mélange contenant environ 10 à environ 60 % d'acide isophtalique, et environ 40 à environ 90 % du dérivé de l'acide téréphtalique.

2. Polyéthercétonecétone sulfonée selon la revendication 1, **caractérisée en ce que** le dérivé de l'acide benzènedicarboxylique est un dichlorure de benzènedicarbonyle.

3. Polyéthercétonecétone sulfonée selon la revendication 1 ou 2, **caractérisée en ce que** le mélange contient d'environ 30 à 50 % en poids de dérivé d'acide isophtalique et d'environ 50 à 70 % de dérivé d'acide téréphtalique.

4. Polyéthercétonecétone sulfonée selon l'une des revendications 1 à 3, **caractérisée en ce qu'**on utilise d'environ 1 à environ 3 parties, en particulier environ 1 partie de diphényléther, et d'environ 1 à environ 3 parties, en particulier environ 1 partie de dérivé d'acide benzènedicarboxylique.

5. Polyéthercétonecétone sulfonée selon l'une des revendications précédentes, **caractérisée en ce que** le degré de sulfonation est ajusté à une valeur d'environ 0,1 à environ 3,0 mmol d'acide sulfonique par gramme de polymère, en particulier d'environ 0,2 à environ 2,5 mmol d'acide sulfonique par gramme de polymère.

6. Polyéthercétonecétone sulfonée selon la revendication 5, **caractérisée en ce que** le degré de sulfonation est ajusté à une valeur d'environ 1,0 à environ 2,2 mmol d'acide sulfonique par gramme de polymère.

7. Polyéthercétonecétone sulfonée selon la revendication 5, **caractérisée en ce que** le degré de sulfonation est ajusté à environ 0,2 mmol d'acide sulfonique par gramme de polymère, ou moins.

8. Polyéthercétonecétone sulfonée selon l'une des revendications précédentes, **caractérisée en ce qu'**elle se présente sous forme d'une membrane.

9. Polyéthercétonecétone sulfonée selon la revendication 8, **caractérisée en ce que** la membrane est une membrane échangeuse de cations et/ou une membrane conductrice de protons.

10. Polyéthercétonecétone sulfonée selon la revendication 8 ou la revendication 9, **caractérisée en ce que** la membrane est une membrane pour piles à combustible, en particulier pour PEMFC ou DMFC.

11. Polyéthercétonecétone sulfonée selon l'une des revendications 8 à 10, **caractérisée en ce que** la membrane est une membrane pour électrodialyse, électrolyse et/ou piles ou batteries.

12. Polyéthercétonecétone sulfonée selon l'une des revendications 8 à 11, **caractérisée en ce que** la membrane est un mélange de polyéthercétonecétone sulfonée avec une polyphénylène éthersulfone et/ou une polysulfone et/ou des oxydes mixtes, en particulier de la silice, des silicates de TEOS et/ou d'APTMOS/TEOS, et/ou des hétéropolyacides et/ou du sulfophénylphosphonate de zirconium, en particulier du sulfophénylphosphonate de zirconium amorphe, et/ou du phosphate de zirconium, en particulier du phosphate de zirconium délaminé.

13. Polyéthercétonecétone sulfonée selon l'une des revendications 8 à 12, **caractérisée en ce que** la membrane est une membrane multicouche, avec d'autres ionomères, en particulier de l'acide perfluorosulfonique.

14. Polyéthercétonecétone sulfonée selon l'une des revendications 8 à 13, **caractérisée en ce que** la membrane est une membrane multimatrice et/ou une membrane à renfort mécanique et/ou une membrane revêtue, en particulier revêtue d'un catalyseur, et/ou une membrane macroporeuse et/ou une membrane réticulée, en particulier une membrane réticulée conductrice de protons.

15. Polyéthercétonecétone sulfonée selon l'une des revendications 1 à 11, **caractérisée en ce qu'**elle se présente sous forme d'un mélange avec au moins un autre constituant.

16. Pile à combustible, **caractérisée en ce qu'**elle est constituée au moins en partie d'une polyéthercétonecétone sulfonée selon l'une des revendications 8 à 14.

17. Procédé de préparation de polyéthercétonecétone sulfonée selon l'une des revendications précédentes, **caractérisé en ce qu'**on sulfone une polyéthercétonecétone amorphe, ce à l'occasion de quoi on prépare la polyéthercétonecétone sulfonée en utilisant du diphényléther et un dérivé d'acide benzènedicarboxylique, et le dérivé d'acide benzènedicarboxylique est un mélange d'au moins 2 dérivés différents d'acide benzènedicarboxylique, au moins d'un dérivé d'acide isophtalique et d'un dérivé d'acide téréphtalique, et contient d'environ 10 à environ 60 % de dérivé d'acide isophtalique et d'environ 40 à environ 90 % de dérivé d'acide téréphtalique.

18. Procédé selon la revendication 17, **caractérisé en ce que** le dérivé d'acide benzènedicarboxylique est un dichlorure de benzènedicarbonyle.

19. Procédé selon la revendication 17 ou 18, **caractérisé en ce que** le mélange contient en particulier d'environ 30 à environ 50 % de dérivé d'acide isophtalique et en particulier d'environ 50 à environ 70 % de dérivé d'acide téréphtalique.

20. Procédé selon l'une des revendications 17 à 19, **caractérisé en ce qu'**on utilise d'environ 1 à environ 3 parties, en particulier environ 1 partie de diphényléther, et d'environ 1 à environ 3 parties, en particulier environ 1 partie de dérivé d'acide benzènedicarboxylique.

21. Procédé selon l'une des revendications 17 à 20, **caractérisé en ce que** la sulfonation est mise en oeuvre par utilisation d'au moins un solvant et/ou d'au moins un agent de sulfonation.

22. Procédé selon la revendication 21, **caractérisé en ce qu'**on utilise en tant que solvant un solvant halogéné.

23. Procédé selon la revendication 21 ou 22, **caractérisé en ce qu'**on utilise en tant qu'agent de sulfonation l'acide chlorosulfonique.

24. Polyéthercétonecétone sulfonée selon l'une des revendications 1 à 7, **caractérisée en ce qu'**elle peut être préparée par le procédé selon l'une des revendications 17 à 23.

25. Utilisation de polyéthercétonecétone amorphe sulfonée selon l'une des revendications 1 à 7 pour fabriquer des membranes.

26. Utilisation selon la revendication 25, **caractérisée en ce que** les membranes sont des membranes échangeuses de cations et/ou des membranes conductrices de protons.

27. Utilisation de polyéthercétonecétone amorphe sulfonée selon l'une des revendications 1 à 7 pour préparer un mélange de polymères.
